(19) Europäisches Patentamt

European Patent Office

Office européen des brevets

(11) Publication number: **0 114 081**
**A1**

(12) **EUROPEAN PATENT APPLICATION**

(21) Application number: 84200025.9

(22) Date of filing: 10.01.84

(51) Int. Cl.³: **A 01 J 25/15**

(30) Priority: 12.01.83 NL 8300099

(43) Date of publication of application: 25.07.84
Bulletin 84/30

(84) Designated Contracting States: **AT BE CH DE FR GB IT LI LU NL SE**

(71) Applicant: **Koopmans, Hans, Gasthuissingel 24, NL-8701 BL Bolsward (NL)**

(72) Inventor: **Koopmans, Hans, Gasthuissingel 24, NL-8701 BL Bolsward (NL)**

(74) Representative: **Noz, Franciscus Xaverius, ir. et al, Boschdijk 155 P.O. Box 645, NL-5600 AP Eindhoven (NL)**

(54) Method and device for compressing curds charged in cheese-vats.

㊼ A method of compressing curds charged in cheese-vats in which the cheese-vats are placed on a supporting surface (1) forming part of a device provided with a pressing member (5) displaceable in a direction of height and equipped with flexible, inflatable hoses, which are subjected to pressure for compression after they have been put on the covers of the cheese-vats with the aid of the pressing member (5) whereby for the period of time required for compressing the curds the pressure in the flexible, inflatable members is kept at least substantially constant and the member (5) displaceable in a direction of height is continuously urged in the direction towards the cheese-vats standing still for said period of time with the aid of setting cylinders (7) by means of which the pressing member (5) can be set in a direction of height.

-1-

## METHOD AND DEVICE FOR COMPRESSING
## CURDS CHARGED IN CHEESE-VATS.

The invention relates to a method of compressing curds charged in cheese-vats, in which the cheese-vats are put on a supporting surface forming part of a device provided with a pressing member which is displaceable in a direction of height and equipped with flexible, inflatable hoses subjected to pressure before the compression after they have been placed on the covers of the cheese-vats with the aid of the pressing member.

Such a method is known from Dutch Patent Application 6713156. In this known method the pressing member, which can be set with the aid of a manually operable screw spindle, is set at a given height, after which the inflatable hoses forming part of said pressing member and being divided into several sections are pressurized for exerting the desired pressure on the curds in the cheese-vats. After only part of the time required in total for compressing the curds has elapsed, the pressure on the cheese-vats is obviated, after which the cheese-vats are displaced over a given distance in the device, after which the curds in the cheese-vats are again subjected to pressure by inflating the flexible hoses. This is repeated several times during the total period required for compressing the curds.

In practice it has been found that eliminating the pressure exerted on the curds several times adversely affects the quality of the final product.

According to the invention the pressure in the flexible, inflatable members is kept at least substantially constant for the period of time required for compressing the curds and the member displaceable in a direction of height is continuously urged in the direction of the cheese-vats standing still for said time with the aid of setting cylinders by means of which the pressing member is adjustable in a direction of height.

Since in this method pressure is continuously exerted on the cheese during the formation thereof from the curds, a satisfying product is obtained, whilst by using the flexible members it is ensured that in all cheese-vats the appropriate pressure is exerted, since minor unevennesses in the direction of height of the covers on the cheese-vats can be compensated for by the flexible members.

Furthermore for carrying out the method embodying the invention it is possible to use a simple device for compressing curds charged in cheese-vats comprising a supporting surface for the cheese-vats and a pressing member located above said surface and being displaceable in a direction of height because in accordance with the invention the pressing member comprises a housing adjustable in a direction of height with the aid of setting cylinders, said housing accommodating members that can be inflated by air and extend along at least substantially the whole length of the pressing member, said members being in contact with a sheet of flexible material closing the underside of the housing.

The setting cylinders can be used for setting the pressing member between an active position for compressing the curds in the cheese-vats and a higher, inactive position in which the cheese-vats can be moved into and out of the device as well as for exerting the required pressure on the vats when the cheese is compressed. The fact that the flexible members can extend along the whole length of the pressing member also contributes to a simple structure of the pressing member and to the possibility of using a simple control-mechanism for supplying and conducting away pressurized air to and from the inflatable members.

It is noted that Dutch Patent Application 7613772 discloses a device for simultaneously compressing cheeses in cheese moulds, in which a pressing plate arranged across a plurality of cheese moulds placed in the device is pressed down with the aid of a central bellows member against the action of compression springs by means of which the pressing plate is suspended and can be moved back into a position in which the cheese moulds can be introduced into the device.

This requires a comparatively complicated suspension mechanism for the pressing plate using pivotal joints and sliding rods. Moreover, also because the spring tension of the various springs and the friction occurring at various points are not accurately determined, a uniform pressing force on the curds in the various cheese moulds can practically not be ensured. A further disadvantage is that the bellows have to be heavy to an extent such that they have to be capable of overcoming the force of the springs by which the pressing plate is suspended.

The invention will be described more fully hereinafter with reference to the accompanying Figures schematically showing an embodiment of the device in accordance with the invention.

Fig. 1 is a schematic side elevation of a device embodying the invention.

Fig. 2 is a schematic cross-sectional view of the device of Fig. 1.

The device comprises an endless conveyor belt 1 guided around two horizontal reversing drums 2 and 3. The upper run of the endless conveyor belt 1 constitutes the supporting surface for cheese-vats 4. By using an endless conveyor belt the cheese-vats filled with curds can be put on the belt near one end thereof and by gradually displacing the belt the whole upper run of the endless conveyor 1 can be covered with cheese-vats 4 arranged, as the case may be, side by side and one after the other.

Above the conveyor belt 1 is arranged a U-section housing 5, which is suspended to the piston rods 6 of setting cylinders 7, which are fastened to a frame (not shown).

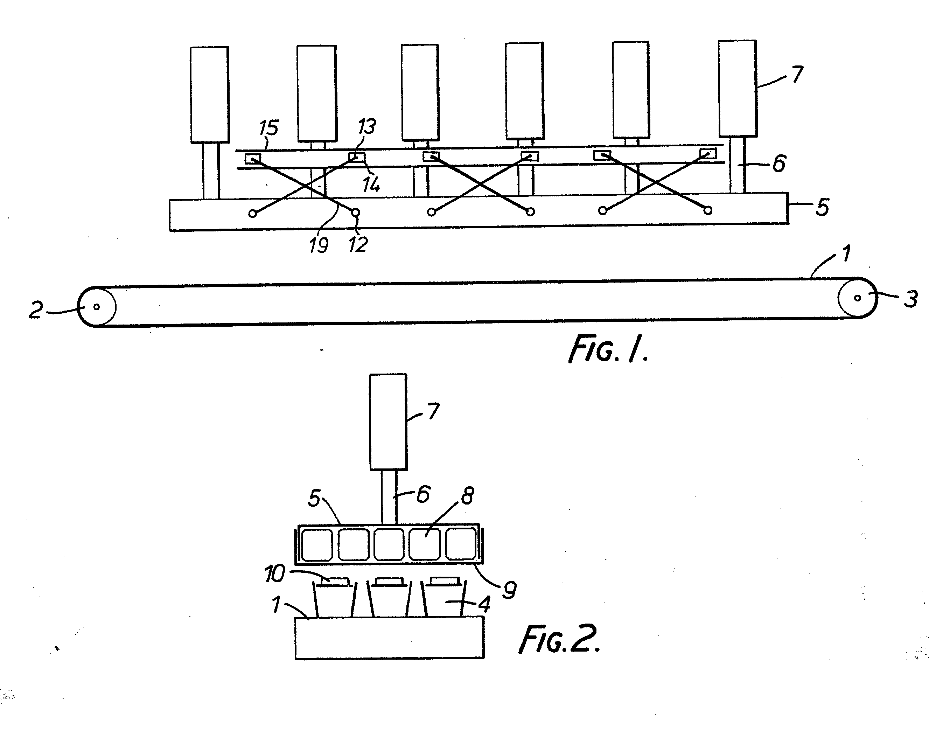

As is shown in Fig. 1, the housing 5 is suspended to pairs of carrying arms 11 arranged crosswise and having their lower ends pivoted to the housing 5 with the aid of shafts 12. The top ends of the arms 11 are coupled with the aid of shafts 13 extending parallel to the shafts 12 with sliding blocks 14, which are slidable in sliding tracks 15 extending parallel to the direction of length of the housing.

The housing 5 accommodates a plurality of inflatable members preferably formed by flexible hoses 8 extending in the direction of length of the housing. On the underside the housing is closed by a sheet 9, the rims of which are fixed to the housing and which is made from flexible elastic material, for example, rubber or a synthetic resin, which is flexible in all directions and easily wrinkles. The shape of the inflatable members 8 is preferably chosen so that, viewed in a cross-section, these members lying side by side are at least substantially in contact with the whole surface of the flexible sheet 9 in their inflated state.

After the desired number of cheese-vats 4 are placed on the upper run of the endless conveyor 1, which upper run is supported by stationary members (not shown), the housing 5 will be moved down with the aid of the cylinders 7 until the flexible sheet 9 engages the top ends of pressing rods 10 placed on the curds in the cheese-vats 4.

Subsequently the members or hoses 8 are inflated so that the sheet 9 is firmly urged against the pressing members 10, even if the ends of the pressing members 10 facing the flexible sheet 9 are located at different levels.

By using a sheet 9 of thin, flexible material the pressing members are prevented from getting into an undesirable, inclined position in the case of discrepances in filling the cheese-vats or the like, since the sheet 9 will compensate for such differences and the pressing members will maintain substantially their horizontal position.

Then the required pressure is applied to the pressing members 10 by raising the pressure in the setting cylinders 7, which ensure the generation of the actual pressing force. Through the flexible sheet 9 of the pressing member this pressure will be uniformly distributed on all pressing members 10. When the pressing members 10 move down by the action of the pressing force, the housing 5 of the device will also move down, since the pressure in the setting cylinders is maintained at the desired value as long as the cheese has to be subjected to pressure for moulding.

After the material in the cheese-vats 4 has been kept under pressure for a sufficiently long time, the pressure on the housing 5 can be reduced by allowing air to escape from the inflatable members 8, after which the pressing member can be moved upwards as a whole by the setting cylinders 7. Subsequently the endless belt 1 can again be set moving in order to conduct the cheese-vats away near one end of the belt. Then a new charge of cheese-vats can be put on the belt and the operations described above for compressing the curds in the cheese-vats can be repeated.

It will be obvious that the device may be used for working cheese-vats of different heights so that optionally lower or higher and/or cheese-vats of smaller or larger diameter may be put on the endless belt.

With the aid of the mode of suspenion described the housing remains invariably at least substantially horizontal, even if the device is not completely filled with cheese-vats so that even then the device can be employed.

The figures used in the claims are only meant to explain more clearly the intention of the invention and are not supposed to be any restriction concerning the interpretation of the invention.

-1-

CLAIMS

1.   A method of compressing curds charged in cheese-vats in which the cheese-vats are placed on a supporting surface forming part of a device provided with a pressing member displaceable in a direction of height and equipped with flexible, inflatable hoses, which are subjected to pressure for compression after they have been put on the covers of the cheese-vats with the aid of the pressing member characterized in that for the period of time required for compressing the curds the pressure in the flexible, inflatable members is kept at least substantially constant and the member displaceable in a direction of height is continuously urged in the direction towards the cheese-vats standing still for said period of time with the aid of setting cylinders by means of which the pressing member can be set in a direction of height.

2.   A method as claimed in Claim 1 characterized in that at the termination of the compression first the pressure in the flexible, inflatable members is reduced, after which the pressing member is displaced with the aid of the setting cylinders in a direction away from the cheese- vats.

3.   A device for compressing curds charged in cheese-vats comprising a supporting surface for the cheese-vats and a pressing member arranged above said surface and being displaceable in a direction of height characterized in that the pressing member comprises a housing which is displaceable in a direction of height with the aid of setting cylinders and which accommodates members being inflatable by air and extending at least substantially along the whole length of the pressing member and being in contact with a sheet of flexible material closing the underside of the housing.

4.    A device as claimed in Claim 3 characterized in that the sheet is formed by a thin, flexible belt.

5.    A device as claimed in anyone of the preceding Claims characterized in that the inflatable members are formed by hoses extending along at least substantially the whole length of the housing.

6.    A device as claimed in anyone of the preceding Claims characterized in that the housing has an at least substantially U-shaped section and is closed on the underside by the sheet.

7.    A device as claimed in anyone of the preceding Claims characterized in that the supporting surface is formed by the upper run of an endless belt, the width of which corresponds at least substantially with the width of the housing of the pressing member.

8.    A device as claimed in anyone of the preceding Claims 3 to 7 characterized in that the housing is suspended to pairs of carrying arms arranged crosswise, the lower ends of which are coupled with the housing with the aid of pivotal shafts extending transversely of the direction of length of the housing, whereas the top ends of the carrying arms are pivotally coupled with sliding blocks which are slidably arranged in sliding tracks extending parallel to the direction of length of the housing.

FIG. I.

FIG. 2.

0114081

## European Patent Office

# EUROPEAN SEARCH REPORT

Application number

EP 84 20 0025

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| P,X | NL-A-8 104 030 (SAS B.V.)<br>* Whole document * | 1-7 | A 01 J 25/15 |
| D,Y | NL-A-6 713 156 (J.À. SAS)<br>* Page 6, line 33 - page 10, line 1; figures 1-3 * | 1-7 | |
| Y | US-A-4 045 152 (H.J. PETERSON et al.)<br>* Column 4, line 28 - column 5, line 44; figures 1,3-4 * | 1,3 | |
| A | NL-A-7 613 772 (HOLVRIEKA INTERNATIONAL B.V.)<br>* Page 3, line 1 - page 4, line 20; figures 1-2 * | 1,3 | |
| A | FR-A-2 308 582 (J. CHANET) | | TECHNICAL FIELDS SEARCHED (Int. Cl. ³)<br><br>A 01 J |

The present search report has been drawn up for all claims

| Place of search | Date of completion of the search | Examiner |
|---|---|---|
| THE HAGUE | 06-03-1984 | NEHRDICH H.J |